# EUROPÄISCHE PATENTSCHRIFT

(11) **EP 3 324 499 B1**
(45) Veröffentlichungstag und Bekanntmachung des Hinweises auf die Patenterteilung: **23.01.2019**
(21) Anmeldenummer: 17200591.0
(22) Anmeldetag: 08.11.2017
(51) Int. Cl.: H01S 3/067, H01S 3/23, H01S 3/00, H01S 3/10, H01S 3/16

(54) **LASERANORDNUNG SOWIE EIN VERFAHREN ZUR OPTISCHEN VERSTÄRKUNG ULTRAKURZER LASERIMPULSE**
LASER ASSEMBLY AND A METHOD FOR OPTICAL AMPLIFICATION OF ULTRASHORT LASER PULSES
DISPOSITIF LASER AINSI QUE PROCÉDÉ DE RENFORCEMENT OPTIQUE D'IMPULSIONS LASER ULTRACOURTES

(30) Priorität: 16.11.2016 DE 102016222528
(43) Veröffentlichungstag der Anmeldung: 23.05.2018
(73) Patentinhaber: InnoLas Photonics GmbH, 82152 Krailling (DE)
(72) Erfinder: Geiger, Stephan, 85241 Hebertshausen (DE); Sotier, Florian, 80337 München (DE)
(74) Vertreter: Rösler, Uwe

(56) Entgegenhaltungen:
- DE-A1- 19 531 059
- US-A1- 2009 141 341
- FLORIAN SOTIERA ET AL: "Ultra-short pulses from a 2 m fiber laser source and applications in materials processing", 9TH INTERNATIONAL CONFERENCE ON PHOTONIC TECHNOLOGIES, LANE 2016, 19. September 2016 (2016-09-19), Seiten 1-4, XP055436541, Fürth, Germany
- NICOLA COLUCCELLI ET AL: "Single-clad Tm-Ho:fiber amplifier for high-power sub-100-fs pulses around 1.9 [mu]m", OPTICS LETTERS, OPTICAL SOCIETY OF AMERICA, Bd. 38, Nr. 15, 1. August 2013 (2013-08-01), Seiten 2757-2759, XP001583738, ISSN: 0146-9592, DOI: HTTP://DX.DOI.ORG/10.1364/OL.38.002757
- HOOGLAND H ET AL: "Fiber chirped pulse amplifier at 2.08 [mu]m emitting 383-fs pulses at 10 nJ and 7 MHz", OPTICS LETTERS, OPTICAL SOCIETY OF AMERICA, Bd. 39, Nr. 23, 1. Dezember 2014 (2014-12-01), Seiten 6735-6738, XP001592871, ISSN: 0146-9592, DOI: 10.1364/OL.39.006735 [gefunden am 2014-12-01]

## Beschreibung

### Technisches Gebiet

Die Erfindung bezieht sich auf eine Laseranordnung sowie ein Verfahren zur optischen Verstärkung ultrakurzer Laserimpulse, die im Wege einer Chirped-Impulsverstärkung (CPA) verstärkt werden, mit einem Wellenlängenanteil im Wellenlängenbereich von 1.5 µm bis 2.1 µm und zeitlichen Pulsdauern im Piko- oder Femtosekundenbereich. Die Vorrichtung umfasst wenigstens folgende Komponenten: eine optische Einheit zur Erzeugung sogenannter Seed-Laserimpulse mit zeitlichen Pulsdauern im Piko- oder Femtosekundenbereich und wenigstens einem spektralen Wellenlängenanteil mit einer spektralen Bandbreite von mindestens 100 nm innerhalb eines Wellenlängenspektrums zwischen 1,5 µm und 2,1 µm, ein optisches Volumen-Bragg-Gitter, kurz VBG1, das derart ausgebildet und der optischen Einheit mittel- oder unmittelbar im Strahlengang der Seed-Laserimpulse nachgeordnet ist, dass die im VBG1 reflektierten Laserimpulse verglichen zu den Seed-Laserimpulsen bezüglich ihrer zeitlichen Pulsdauer gestreckt und ihrer spektralen Bandbreite reduziert sind, eine dem VBG1 mittel- oder unmittelbar nachgeordnete Faser-basierte, optische Verstärker-Anordnung, längs der zumindest Teile der reflektierten Laserimpulse verstärkt werden, zum Erhalt verstärkter Laserimpulse, sowie ein weiteres optisches Volumen-Bragg-Gitter, kurz VBG2, das derart ausgebildet und der optischen Verstärker-Anordnung mittel- oder unmittelbar nachgeordnet ist, dass die im VBG2 reflektierten, verstärkten Laserimpulse verglichen zu den verstärkten Laserimpulsen bezüglich ihrer zeitlichen Pulsdauer komprimiert sind.

### Stand der Technik

Laseranordnungen zur Erzeugung hochenergetischer, ultrakurzer Laserimpulse mit Wellenlängen im nahen Infrarotbereich, insbesondere Wellenlängen um 2 µm (IR-B-Bereich) eignen sich für eine Vielzahl wissenschaftlicher, medizinischer sowie auch industrieller Anwendungen, wie z.B. der nahen Infrarotspektroskopie, der augenschonenden Augenuntersuchung, als Instrument zur Durchführung chirurgischer Eingriffe sowie aber auch zur Materialbearbeitung im Allgemeinen. So vermögen Laserstrahlen mit Wellenlängen im Bereich von 2 µm bspw. lichttransparentes Glasmaterial weitgehend verlustfrei zu durchdringen. Ebenso weisen die in der Halbleitertechnologie relevanten Materialien Silizium und Germanium eine hohe optische Transparenz für derartige Wellenlängen auf. Dies eröffnet interessante Materialbearbeitungsmöglichkeiten. Bspw. durch Fokussierung derartiger Laserimpulse sind lokale Glasmaterialmodifikationen innerhalb eines Glaskörpers im Fokusbereich der Laserstrahlung möglich. Dies ermöglicht ein direktes Laserstrahlschreiben innerhalb von Glasmaterialien sowie Materialien mit vergleichbaren optischen Transparenzeigenschaften, in denen Strukturen mit Strukturdimensionen bis hinab zu kleiner als 2 µm eingebracht werden können. Auf diese Weise können Wellenleiterstrukturen, die sich durch unterschiedliche optische Brechzahlen auszeichnen, sogenannte Tunnelnetzwerkstrukturen sowie auch Hohlraumstrukturen innerhalb von Glaskörpern und Körpern mit vergleichbaren Transparenzeigenschaften hergestellt werden.

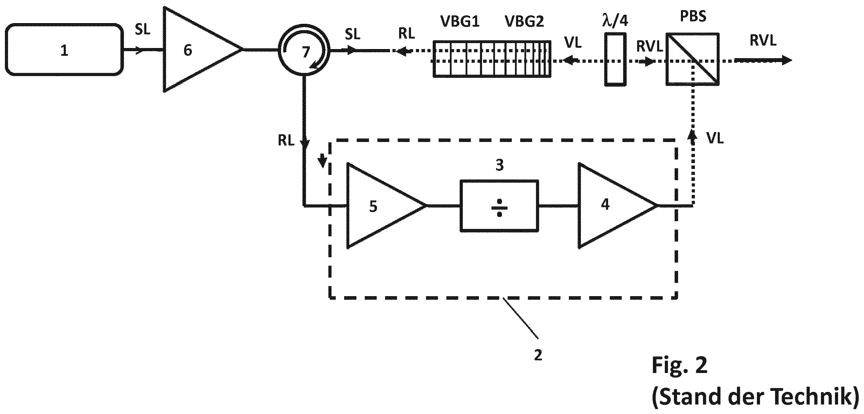

In einem Beitrag von F. Sotier, S. Geiger, W. Kippnusu, G. Marowsky, K. Siefermann, "Ulta-short pulses from a 2 µm fiber laser source and applications in materials processing", 9th International Conference on Photonic Technologies LANE 2016, veröffentlicht durch Bayerisches Laserzentrum GmbH, ist eine Laseranordnung zur optischen Verstärkung ultrakurzer Laserimpulse mit Impulsdauern im Piko- oder Femtosekundenbereich offenbart, die im weiteren unter Bezugnahme auf Figur 2 kurz erläutert wird.

Zur Erzeugung sog. Seed-Laserpulse SL dient eine optische Einheit 1, die einen Laseroszillator umfasst, bspw. ein Erbium dotierter Faseroszillator, dessen Laserimpulse eine spektrale Bandbreite von wenigstens 100 nm innerhalb eines Wellenlängenspektrums zwischen 1,5 µm und 2,1 µm aufweisen und deren zeitliche Pulsdauern im Piko- oder Femtosekundenbereich liegen. Typischerweise werden die Seed-Laserimpulse SL mit einer Repetitionsrate im zweistelligen MHz-Bereich, bsw. mit ca. 30 MHz erzeugt. Typischerweise verfügen die von Seiten der optischen Einheit 1 emittierten Laserimpulse Impulsenergien im Piko-Joule-Bereich. Zur optischen Verstärkung der emittierten Seed-Laserimpulse SL dient eine Faser-basierte optische Verstärkereinheit 6. Die vermittels der Verstärkereinheit 6 vorverstärkten Seed-Laserimpulse SL gelangen nachfolgend über eine freie optische Kopplung in ein optisches Volumen-Bragg-Gitter, VBG 1, innerhalb dem jeder Laserimpuls Wellenlängen- bzw. Frequenz-abhängig in die Gitterstruktur einzudringen vermag. Jeder reflektierte und aus dem VBG1 austretende Laserimpuls RL verfügt somit über eine gestreckte zeitliche Pulsdauer sowie über eine geringere spektrale Breite verglichen zu den in das VBG1 eintretenden Seed-Laserpulsen SL. Die im VBG 1 reflektierten Laserimpulse RL gelangen zum Zwecke der optischen Separation zu den in Richtung des VBG 1 gegenläufig gerichteten Seed-Laserpulsen SL in einen optischen Zirkulator 7, aus den die reflektierten Laserpulse RL in eine nachfolgende Faser-basierte optische Verstärkeranordnung 2 eintreten. Die Faser-basierte, optische Verstärker-Anordnung 2 verfügt über eine erste Faser-basierte, optische Verstärker-Einheit 5 innerhalb der sämtliche reflektierte Laserimpulse RL einer weiteren optischen Verstärkung unterliegen. Nachfolgend gelangen die verstärkten Laserimpulse in einen optischen Modulator 3, vorzugsweise in Form eines akusto-optischen Modulators, in dem eine Art einer Laserimpulsselektion vorgenommen wird, wodurch die von Seiten des Laseroszillators 1 herrührende Repetitionsrate von einigen 10 MHz signifikant reduziert wird, so dass die Laserimpulse nach Austreten aus dem optischen Modulator 3 eine um wenigstens eine Größenordnung geringere Repetitionsrate aufweisen. Die bezüglich ihrer Repetitionsrate reduzierten Laserimpulse gelangen nachfolgend in eine weitere Faser-basierte, optische Verstärker-Einheit 4, die der Hauptverstärkung dient und aus der verstärkte Laserimpulse VL austreten. Durch die Kombination sämtlicher Faser-basierten, optischen Verstärker-Einheiten 6, 5 und 4 ist es möglich die Laserimpulsenergie der unmittelbar aus der optischen Einheit 1 austretenden Seed-Laserimpulse um wenigstens zwei bis drei Größenordnungen zu verstärken. Dies bedeutet, dass die aus der Faser-basierten, optischen Verstärker-Anordnung 2 austretenden, verstärkten Laserimpulse VL typischerweise Pulsenergien im Mikro-Joule-Bereich besitzen.

Die Faser-basierten, optischen Verstärkereinheiten 6, 5 und 4 weisen typischerweise mehrere Meter lange Thulium-dotierte Silikatfasern auf, die über einen Fasermantel und einen Faserkern verfügen, dessen Faserkern im angegebenen Ausführungsbeispiel mit Thulium dotiert ist. Gleichwohl eignen sich Erbium oder Holmium als Dotierstoffe. Zum Zwecke der optischen Verstärkung wird geeignet gewähltes Pumplicht längs des Fasermantels eingekoppelt. Bei den eingesetzten Faser-basierten, optischen Verstärker-Einheiten 6, 5, 4 handelt es sich vorzugsweise jeweils um die Polarisation erhaltende Faserverstärker.

Zum Zwecke der Kompensation der zeitlichen Pulsdauerstreckung, die die reflektierten Laserimpulse RL durch das erste Volumen-Bragg-Gitter VBG 1 erfahren haben, werden die aus der Faser-basierten, optischen Verstärker-Anordnung 2 austretenden, verstärkten Laserimpulse VL zum Zwecke der Pulskompression in ein zweites Volumen-Bragg-Gitter 2, VBG 2, geleitet. In der in Figur 2 illustrierten Laseranordnung sind das erste und zweite Volumen-Bragg-Gitter VBG 1, VBG 2, einstückig ausgebildet, so dass zur Vermeidung einer gegenseitigen Laserimpulsbeeinflussung die Lichtwege innerhalb des Volumen-Bragg-Gitters bezüglich der Seed-Laserimpulse SL sowie der verstärkten Laserimpulse VL räumlich separiert voneinander angeordnet sind. Durch die gleichfalls wellenlängenselektierte Reflexion der verstärkten Laserimpulse VL innerhalb des zweiten Volumen-Bragg-Gitters VBG 2 wird die zeitliche Pulsdauerstreckung, die die reflektierten Laserimpulse RL durch Wechselwirkung mit dem ersten Volumen-Bragg-Gitter VBG 1 erfahren haben, vollständig kompensiert. Zur Separation der innerhalb des zweiten Volumen-Bragg-Gitters 2 reflektierten verstärkten Laserimpulse RVL, die rückläufig zu den auf das zweite Volumen-Bragg-Gitter VBG 2 gerichteten verstärkten Laserimpulse VL orientiert sind, dient eine λ/4 Verzögerungsplatte sowie ein im Strahlengang nachgeordneter Polarisationsstrahlteiler PBS.

Mit der bekannten Laseranordnung können Laserimpulse RVL mit Wellenlängen im Bereich von 2 µm, einer Repetitionsrate von bis ca. 10 MHz und Pulsleistungen von über 100 mW sowie zeitliche Pulsdauern von bis hinab zu einigen wenigen Piko-Sekunden erzielt werden.

Der Druckschrift DE 10 2008 047 226 A1 ist eine Vorrichtung zum Verstärken von Lichtimpulsen zu entnehmen, bei der zu Zwecken der Verstärkung von Lichtimpulsen, deren Wellenlängen im Bereich von 1 µm liegen, eine Abfolge von zeitlicher Impulsstreckung, Verstärkung der Lichtimpulse sowie Impulskompression durchgeführt wird. Systembedingte Dispersionseinflüsse auf die verstärkten Lichtimpulse werden mit einem Element variabler Dispersion, bspw. mittels eines verstellbaren Prismen- oder Beugungsgitterpaares, durchgeführt.

Die Druckschrift US 2009/0323740 A1 offenbart gleichsam den Einsatz eines Impulslängen-Kompressors zum Beeinflussen der Impulsdauer von verstärkten ultrakurzen Laserimpulsen mit Hilfe eines Volumen-Bragg-Beugungsgitters oder einer Bragg- Wellenleiterstruktur

### Darstellung der Erfindung

Der Erfindung liegt die Aufgabe zugrunde eine Laseranordnung zur optischen Verstärkung ultrakurzer Laserimpulse sowie ein diesbezügliches Verfahren derart weiterzubilden, so dass es mit möglichst geringem technischen und kostenmäßigen Aufwand möglich sein soll, ausgehend von einer vorstehend erläuterten Laseranordnung, die zeitlichen Pulsdauer der Laserimpulse weiter zu verkürzen, vorzugsweise zum Erhalt von Laserimpulsen mit zeitlichen Pulsdauern im Femtosekundenbereich. Auf dieser Weise soll die Pulsspitzenleistung der Laserimpulse signifikant gesteigert werden. Die hierfür zu ergreifenden Maßnahmen sollen keine aufwendigen Justage- und verfahrenstechnisch kompliziert handzuhabenden Maßnahmen erfordern und überdies über eine ausreichend gute betriebliche Robustheit verfügen, so dass ihr Einsatz unter industriellen Rahmenbedingungen möglich sein soll.

Die Lösung der der Erfindung zugrunde liegenden Aufgabe ist im Anspruch 1 angegeben. Ein lösungsgemäßes Verfahren zur optischen Verstärkung ultrakurzer Laserimpulse ist Gegenstand des Anspruches 10. Bevorzugte Verwendungen der lösungsgemäßen Laseranordnung sind Gegenstand der Ansprüche 12 ff. Den Erfindungsgedanken in vorteilhafter Weise ausbildende Merkmale sind Gegenstand der Unteransprüche sowie der weiteren Beschreibung insbesondere unter Bezugnahme auf das illustrierte Ausführungsbeispiel zu entnehmen.

Lösungsgemäß zeichnet sich die Laseranordnung gemäß den Merkmalen des Oberbegriffes des Anspruches 1 dadurch aus, dass eine optische Dispersionsausgleichseinheit vorgesehen ist, die zumindest eine zur Faser-basierten, optischen Verstärker-Anordnung inhärenten Dispersion entgegengesetzte Dispersion besitzt, wobei die Dispersionsausgleicheinheit aus einem für die Wellenlängen 1.5-2.1 µm transparenten, einstückigen Halbleitermaterial besteht, das über einen materialinhärente fest vorgegeben, d.h. konstante Dispersion verfügt. Die Dispersionsausgleichseinheit ist längs des Strahlenganges der reflektierten Laserimpulse vor der optischen Verstärker-Anordnung oder der optischen Verstärker-Anordnung längs des Strahlenganges der verstärkten Laserimpulse oder der reflektierten, verstärkten Laserimpulse nachgeordnet, angeordnet.

Vorzugsweise ist die Dispersionsausgleichseinheit dem zweiten Volumen-Bragg-Gitter VBG 2 längs des Strahlenganges der reflektierten, verstärkten Laserimpulse mittel- oder unmittelbar nachgeordnet. Eine Anordnung der Dispersionsausgleichseinheit längs des Strahlenganges innerhalb der Laseranordnung ist, wie die weiteren Ausführungen zeigen werden, ebenfalls möglich.

Der lösungsgemäßen Laseranordnung liegt die Erkenntnis zugrunde, dass die Laserimpulse mit Wellenlängen im Bereich von 1,5 bis 2,1 µm jeweils beim Durchtritt durch eine Faser-basierte optische Verstärker-Einheit einer Faser-bedingten Gruppenlaufzeit-Dispersion unterliegen, wodurch die zeitliche Pulsdauer der Laserimpulse gestreckt wird. Vorkehrungen bezüglich einer Kompensation der diesbezüglichen Verstärkungs-bedingten Impulsdauerstreckung sind bis anhin nicht umgesetzt worden, vermutlich da davon ausgegangen worden ist, dass der Faserbedingte Dispersion-Effekt lediglich eine vernachlässigbar kleine zeitliche Pulsdauerstreckung nach sich ziehen würde. Diese Annahme könnte zudem dadurch gestützt sein, dass die spektrale Breite der innerhalb des ersten Volumen-Bragg-Gitters VBG1 reflektierten Laserimpulse gegenüber den ursprünglichen Seed-Laserimpulse um wenigstens einen einstelligen Faktor kleiner ist und typischerweise im Bereich von 10 bis 90 nm liegt, so dass der Dispersionseffekt beim Durchtritt der Bandbreite begrenzten Laserimpulse typischerweise durch Thulium, Erbium oder Holmium dotierte Glasfasern zum Zwecke ihrer optischen Verstärkung unter messtechnischen Gesichtspunkten nicht oder messtechnisch nur geringfügig zum Tragen kommt und daher vernachlässigbar sei.

Neben der vorstehend beschriebenen Kenntnis über die Gruppenlaufzeit-Dispersion und eine damit verbundene Pulsdauerstreckung beim Durchtritt der Laserimpulse durch jede einzelnen Faser-basierte optische Verstärkungs-Einheit, liegt der Erfindung die weitere Erkenntnis zugrunde, dass bestimmt ausgewählte Materialien, die für elektromagnetische Strahlung im Wellenlängenbereich zwischen 1,5 und 2,1 µm, vorzugsweise im Bereich zwischen 1,9 und 2,1 µm, transparent sind, über inverse Dispersionseigenschaften verfügen im Vergleich zu den in den einzelnen Faser-basierten optischen Verstärker-Einheiten eingesetzten Glasfasern.

Ausgehend von beiden vorstehenden Erkenntnissen besteht die Erfindung in der Verwendung eines derartig ausgewählten Materials als optische Dispersionsausgleichseinheit , die derart konfektioniert ist, dass die durch die Gruppenlaufzeit-Dispersion (GDD) im Rahmen der Faser-basierten optischen Verstärkung verursachte zeitliche Pulsdauerstreckung der Laserimpulse zumindest teilweise, vorzugsweise vollständig kompensiert wird.

In einer bevorzugten Ausführungsform besteht die optische Dispersionsausgleichseinheit aus einem für Wellenlängen von 1,5 µm bis 2,1 µm transparenten, einstückigen Halbleitermaterial, das vorzugsweise stangen-, faser- oder blockartig ausgebildet ist und über eine Propagationslänge verfügt, längs der die vorstehend erläuterten Laserimpulse, vorzugsweise die reflektierten verstärkten Laserimpulse RVL das Halbleitermaterial durchlaufen und mit diesem wechselwirken, so dass die dispersionsbedingte Pulsdauerstreckung aufgrund der jeweils Faser-basierten optischen Verstärkung zumindest teilweise, vorzugsweise vollständig kompensiert wird. Als besonders geeignete Halbleitermaterialien, die jeweils eine zur Gruppenlaufzeit-Dispersion einer Glasfaser inverse Dispersion verfügen, sind Silizium, Germanium, Galliumarsenid und Aluminiumarsenid zu nennen.

Es konnte messtechnisch gezeigt werden, dass mit Hilfe der lösungsgemäß ausgebildeten Dispersionsausgleichseinheit, vorzugsweise in Form eines Siliziumkörpers, bei geeigneter Wahl der Propagationslänge die Laserimpulse nach Durchtritt durch den Siliziumkörper ihre ursprünglichen, von Seiten der optischen Einheit bzw. des Laserresonators herrührenden zeitlichen Pulsdauern zumindest weitestgehend wieder erhalten.

Eine das Halbleitermaterial Silizium betreffende Besonderheit besteht darin, dass Silizium über inverse Dispersionseigenschaften bei Wechselwirkung mit Laserimpulsen mit Wellenlängen zwischen 1,5 µm und 2,1 µm zu der Gruppenlaufzeit-Dispersion, die die betreffenden Laserimpulse beim Durchtritt durch eine Glasfaser erfahren. Überdies ist die Propagationslänge durch Silizium um den Faktor 8 bis 50 kürzer als die Propagationslänge durch eine Glasfaser, d.h. zu Zwecken der Pulsdauerkompensation bedingt durch die Gruppenlaufzeitdispersion der Glasfasern ist eine im Vergleich zur Gesamtlänge der zur optischen Verstärkung erforderlichen Glasfasern um den Faktor 8 bis 50 kürzere Propagationslänge durch Silizium erforderlich. Dies ermöglicht zum einen eine baulich sehr einfache Integration der zusätzlichen lösungsgemäßen Dispersionsausgleichseinheit in die bestehende Laseranordnung und trägt darüber hinaus zu einem sehr kompakten und kleinbauenden Aufbau bei.

Durch die bevorzugte Verwendung eines geeignet gewählten Halbleitermaterials als optische Dispersionsausgleichseinheit, die im Wesentlichen einen einzigen Halbleiterkörper umfasst, ist ein geringer Justageaufwand erforderlich, um die Pulsdauer zu kompensierenden Laserimpulse in den Halbleiterkörper einzukoppeln. Der im Wesentlichen Ein-Komponenten-Aufbau wirkt sich auch positiv auf die so genannte Pointing-Stabilität und die Robustheit der gesamten optischen Anordnung aus, die keinen oder nur geringfügigen Wartungsaufwand erfordert. Gilt es überdies die Laseranordnung zu modifizieren, beispielsweise die in der Laseranordnung vorhandenen Volumen-Bragg-Gitter auszutauschen, um beispielsweise die zu verstärkende Zentralwellenlänge der ultrakurzen Laserpulse zu variieren oder deren Bandbreite zu ändern, so ist es nicht erforderlich, die lösungsgemäße Dispersionsausgleichseinheitzu ändern.

Die bevorzugte Verwendung von Silizium, Germanium, Galliumarsenid oder Aluminiumarsenid zur Realisierung der Dispersionsausgleichseinheit hat überdies den Vorteil, dass diese Materialien einen vernachlässigbar geringen Temperaturgang in Bezug auf das Dispersionsverhalten für Laserimpulse im Bereich von 2 µm besitzen. So weist beispielsweise Silizium einen Dispersionsunterschied von 1,3% bei einer Temperaturdifferenz von 50° auf.

Versuche, die die Wirkungsweise der optischen Dispersionsausgleichseinheit demonstrieren, haben gezeigt, dass bei geeigneter Abstimmung der Dispersionsausgleichseinheit in Bezug auf die Propagationslänge eine signifikante Kompression der zeitlichen Pulsdauern der aus der Laseranordnung austretenden, reflektierten verstärkten Laserimpulse nachgewiesen werden konnte. So konnten reflektierte verstärkte Laserimpulse unmittelbar nach Austreten aus der eingangs erläuterten, bekannten Laseranordnung mit zeitlichen Pulsdauern von ca. 3,3 ps mittels der lösungsgemäßen Dispersionsausgleichseinheit auf Pulsdauern von 500 fs und geringer erzeugt werden. Somit konnte gezeigt werden, dass durch Vorsehen der optischen Dispersionsausgleichseinheit eine Pulsverkürzung um eine Größenordnung realisierbar ist, wodurch sich die Laserimpulsleistung in gleicher Weise vergrößert.

Die lösungsgemäß verstärkten ultrakurzen Laserimpulse eröffnen somit effizientere Möglichkeiten zur Verwendung in einer Vielzahl unterschiedlicher Anwendungsbereichen. So eignen sich die lösungsgemäß verstärkten Laserimpulse im Wege einer optischen Fokussierung innerhalb eines ersten für die Wellenlänge der Laserimpulse transparenten Materials derart, so dass innerhalb des ersten Materials oder im Bereich einer Grenzfläche zu einem zweiten Material mit abweichenden optischen Eigenschaften, eine stoffliche Änderung innerhalb des Fokusbereiches im ersten und/oder zweiten Material eintritt. Die stofflichen Änderungen innerhalb des ersten und/oder zweiten Materials können für die unterschiedlichsten Bearbeitungszwecke eingesetzt werden, beispielsweise zum Zwecke des Modifizierens von stofflichen Eigenschaften eines Materials. Weitere Bearbeitungszwecke dienen dem Prozessieren; Brechzahl ändern; Wellenleiter einschreiben; Verbinden; Schweißen von gleichem mit gleichem Material, von ungleichen Materialien, von für Wellenlängen von 2µm transparentem Material mit für Wellenlängen von 2 µm intransparentem Material; Sublimieren; Trimmen im Materialinneren.

Die vorstehenden Bearbeitungszwecke können vorzugsweise an bzw. in den nachstehenden Materialien angewandt werden: Silizium, GaAs, Ge, Borosilikatglas, sowie folgende Kunststoffe: Acrylnitril-Butadien-Styrol (ABS), Acrylester-Styrol-Acrylnitril (ASA), Polyamid (PA), Polybutylenterephthalat (PBT), Polycarbonat (PC), Polyethylen (PE), Polyetheretherketon (PEEK), Polyethersulfon (PES), Polymethylmethacrylat (PMMA), Polyoxymethylen (POM), Polypropylen (PP), Polystyrol (PS), Polytetrafluorethylen (PTFE), Styrol-Acrylnitril (SAN).

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Ausführungsbeispiel für eine lösungsgemäße Laseranordnung mit optischer Dispersionsausgleichseinheit,
- Fig. 2: Laseranordnung gemäß Stand der Technik,
- Fig. 3a, b: Darstellung unterschiedlicher Propagationslängen durch eine optische Dispersionsausgleichseinheit,
- Fig. 4: alternative Laseranordnung mit optischer Dispersionsausgleichseinheit sowie
- Fig. 5: Ausführungsbeispiel für eine lösungsgemäße Laseranordnung mit unterschiedlichen Anordnungsmöglichkeiten der optischen Dispersionsausgleichseinheit innerhalb des Strahlenganges.

### Wege zur Ausführung der Erfindung, gewerbliche Verwendbarkeit

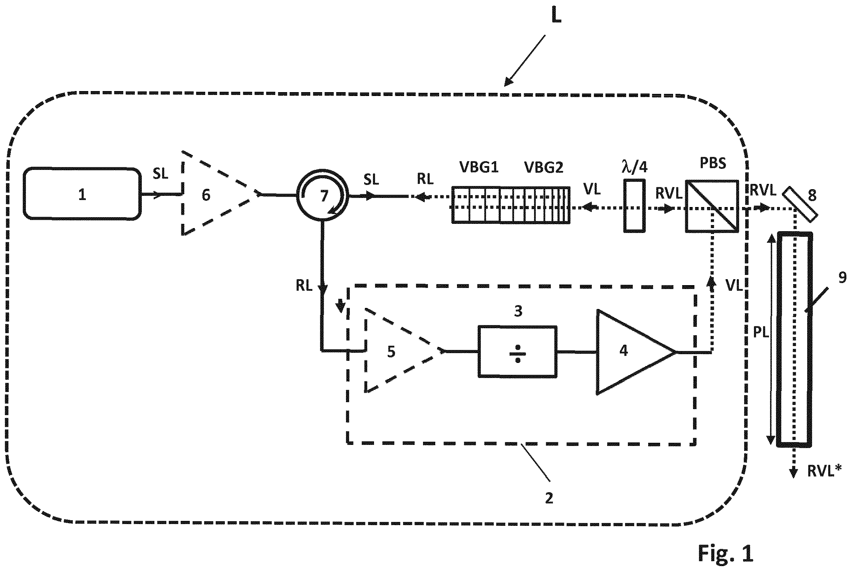

In Figur 1 ist eine Laseranordnung L illustriert, die sämtliche optische Komponenten aufweist, die bereits eingangs unter Bezug auf Figur 2 im Rahmen der bekannten Laseranordnung beschrieben worden sind. Die Laseranordnung L vermag ultrakurze optisch verstärkte Laserimpulse RVL zu erzeugen, die in dem in Figur 1 gezeigten Ausführungsbeispiel durch die jeweils drei Faser-basierten, optischen Verstärker-Einheiten 4, 5 und 6 verstärkt worden sind. Die verstärkten ultrakurzen Laserimpulse RVL gelangen über eine Umlenkeinheit 8, beispielsweise in Form eines Umlenkspiegels in die optische Dispersionsausgleichseinheit 9. Die Umlenkung der verstärkten Laserimpulse RVL erfolgt unter der Maßgabe einer verlustarmen Umlenkung und möglichst kompakten Integration der zusätzlichen Dispersionsausgleichseinheit 9 in die Laseranordnung L.

Die optische Dispersionsausgleichseinheit 9 weist einen Halbleitermaterialkörper, vorzugsweise in Form eines einstückigen bzw. monolithischen Siliziumkörpers, dessen zugeordnete Propagationslänge PL, längs der die Laserimpulse RVL den Siliziumkörper durchlaufen, derart dimensioniert ist, so dass die Gruppenlaufzeit-Dispersion bedingte zeitliche Pulsdauerstreckung, die die Laserpulse bei Durchtritt durch die Faser-basierten optischen Verstärkereinheiten 4, 5 und 6 erfahren, vollständig kompensiert werden. Aus der optischen Dispersionsausgleichseinheit 9 treten somit pulsbreitenreduzierte, verstärkte, ultrakurze Laserimpulse RVL* aus.

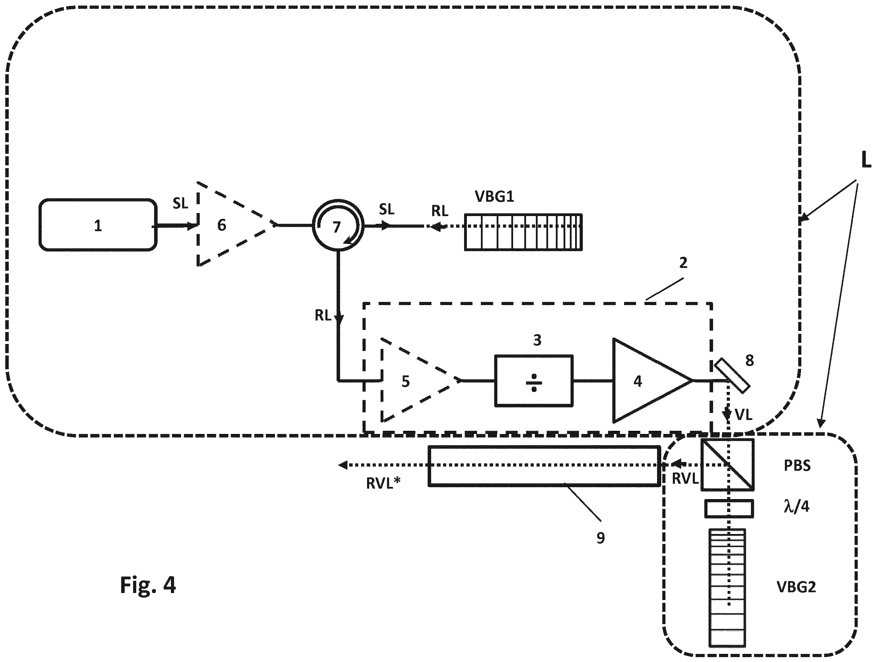

Die Faser-basierten, optischen Verstärker-Einheiten 6 und 5 sind im Falle der Figur 1 und 4 mit strichlierter Linienführung symbolisiert dargestellt, d.h. dass auf wenigstens eine der beiden Faser-basierten, optischen Verstärker-Einheiten 5, 6 verzichtet werden kann ohne die grundsätzliche Funktionalität der Laseranordnung zu beeinträchtigen.

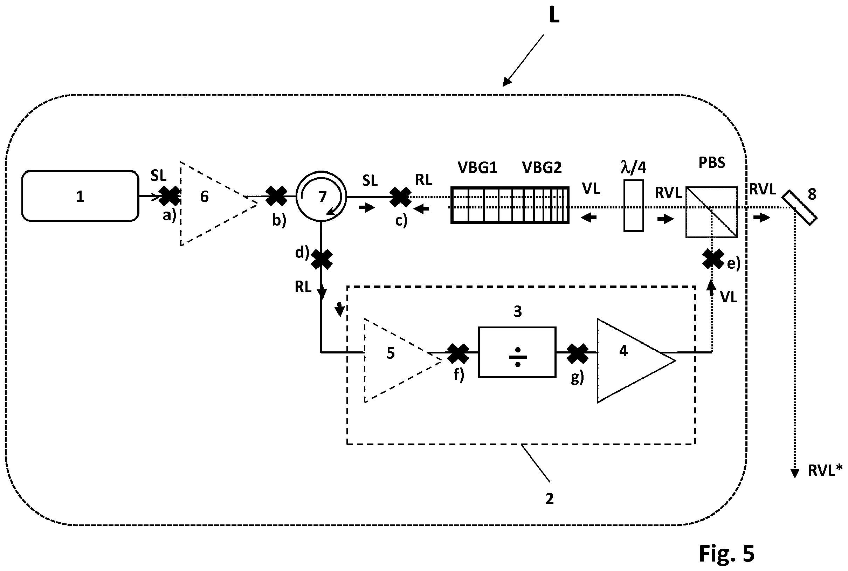

Alternativ zu der in Figur 1 illustrierten Anordnung der Dispersionsausgleichseinheit 9 im Strahlengang nach dem zweiten Volumen-Bragg-Gitter VBG 2 ist es gleichfalls möglich die Dispersionsausgleichseinheit 9 im Strahlengang an anderen Orten anzuordnen, die in Figur 5 jeweils durch ein Kreuz markiert sind. So bietet es sich an die Dispersionsausgleichseinheit 9 im Strahlengang der Seed-Laserimpulse SL unmittelbar nach der optischen Einheit 1, siehe Position a), oder im Strahlengang der Seed-Laserimpulse SL zwischen der Faser-basierten, optischen Verstärker-Einheit 6 und dem Zirkulator 7 anzuordnen, siehe Position b). Geeignet ist auch eine Anordnung der Dispersionsausgleichseinheit 9 zwischen dem Zirkulator 7 und dem ersten Volumen-Bragg-Gitter VBG 1, siehe Position c). An dieser Position ergibt sich überdies die Besonderheit, dass hier die Dispersionsausgleichseinheit 9 von den Laserimpulsen jeweils zweimal durchlaufen wird, nämlich in Form von Seed-Laserimpulsen und in Form reflektierter Laserimpulsen RL. Aus diesem Grund kann die Länge der Dispersionsausgleichseinheit 9, längs der eine Wechselwirkung mit den Laserimpulsen erfolgt, halbiert werden. Ferner ist es möglich die Dispersionsausgleichseinheit 9 längs des Strahlenganges der reflektierten Laserimpulse RL bspw. zwischen dem Zirkulator 7 und der Faser-basierten, optischen Verstärker-Einheit 2 anzuordnen, siehe Position d). Auf diese Weise unterliegen die Laserimpulse einer dispersiven Impulsdauerkompression in der Größenordnung der durch die vorangegangene Verstärkung 6 sowie durch die nachfolgenden optischen Verstärkungen 5 und 4 bedingten Impulsdauerstreckung. Gleichsam kann die Dispersionsausgleichseinheit 9 auch zwischen der Faser-basierten, optischen Verstärker-Anordnung 2 und den nachfolgenden optischen Komponenten, PBS, VBG2 etc. angeordnet werden, siehe Position e). Die vorstehenden Anordnungsmöglichkeiten haben den Charme, dass die Dispersionsausgleichseinheit 9 mit Laserimpulsen beaufschlagt wird, deren Impulsdauern im "langen" Pikosekundenbereich liegen und noch nicht durch das zweite Volumen-Bragg-Gitter VBG 2 Impuls-komprimiert sind.
Auch bietet es sich an die Dispersionsausgleicheinheit 9 als integralen Bestandteil der Faser-basierten, optischen Verstärker-Einheit 2 auszubilden, bspw. durch Anbringung zwischen dem optischen Verstärker 5 und dem optischen Modulator 3, siehe Standort f) oder zwischen dem optischen Modulator 3 und dem optischen Verstärker 4, siehe Standort g).

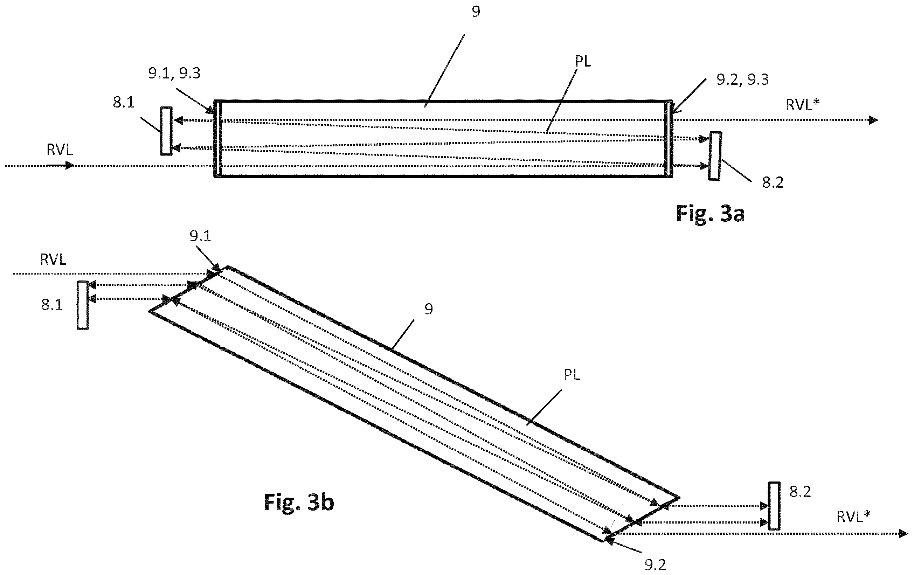

Zur Anordnung und Ausbildung der optischen Dispersionsausgleichseinheit 9 gilt es Maßnahmen zu treffen, so dass die Ein- und Auskoppelverluste für die verstärkten Laserimpulse RVL vermieden bzw. sich so gering wie möglich ausbilden. Hierzu ist in Figur 3a eine Anordnung skizziert, bei der die optische Dispersionsausgleichseinheit 9 in Form eines kompakten einstückigen Halbleiterstabes, vorzugsweise eines Siliziumstabes ausgebildet ist, der über eine stirnseitige Eintrittsfläche 9.1 sowie eine Austrittsfläche 9.2 verfügt, die jeweils über eine reflexionsvermindernde Oberflächenvergütung 9.3 verfügen.

Es sei ferner angenommen, dass der aus der Laseranordnung L austretende verstärkte ultrakurze Laserimpuls RVL unmittelbar über die linke Stirnseite 9.1 in den Siliziumstab eintritt und mehrfach zwischen den jeweils beidseitig, stirnseitig gegenüberliegenden Reflektorspiegeln 8.1 sowie 8.2 hin- und herreflektiert wird, um so die Propagationslänge PL innerhalb des Siliziumstabes gegenüber der tatsächlichen geometrischen Länge des Siliziumstabes zu vergrößern.

Der aus der optischen Dispersionsausgleichseinheit 9 austretende verstärkte Laserimpuls RVL* besitzt gegenüber dem in die optische Dispersionsausgleichseinheit 9 eintretenden ultrakurzen Laserimpuls RVL eine um die Gruppenlaufzeit-Dispersion der vorstehend erläuterten Faser-basierten, optischen Verstärker-Einheiten reduzierte zeitliche Pulsdauer.

Eine alternative Anordnung und Ausbildung der optischen Dispersionsausgleichseinheit 9 ist in Figur 3b dargestellt, bei der die stirnseitige Eintrittsfläche 9.1 sowie Austrittsfläche 9.2 in Form des Siliziumstabes unter dem Brewster-Winkel relativ zum Strahlengang der ultrakurzen Laserimpulse RVL angeordnet sind. Auch in diesem Fall durchlaufen die Laserimpulse RVL die stabförmige Dispersionsausgleichseinheit 9 mehrfach, wobei die Laserimpulse zwischen den beiden stirnseitig angeordneten Spiegeln 8.1 sowie 8.2 hin- und herreflektiert werden. Im Unterschied zu Figur 3a bedarf es aufgrund der Brewsterwinkel-Anordnung keiner zusätzlichen reflexmindernden Oberflächenvergütung an den Ein- sowie Austrittsstirnseiten 9.1, 9.2.

In Figur 4 ist eine alternative Ausbildung der Laseranordnung L illustriert, in der baugleiche Komponenten mit den bereits eingeführten und beschriebenen Bezugszeichen versehen sind, zu deren Beschreibung auf die vorstehende Erläuterung in Bezug auf Figur 2, bzw. 1 verwiesen wird. Im Unterschied zu der bereits erläuterten Laseranordnung L sind zwei körperlich getrennte Volumen-Bragg-Gitter VBG1 sowie VBG2 angeordnet, die jedoch die Laserimpulse in der gleichen Weise bezüglich ihrer Pulsdauern zu strecken und wieder zu komprimieren vermögen. Lediglich das zweite Volumen-Bragg-Gitter VBG2 ist im Unterschied zu der in Figur 1 und 2 illustrierten Anordnung dem Polarisationsstrahlteiler PBS gegenüberliegend angeordnet. Ansonsten sind die Strahlengänge identisch. Gleichsam zu dem in Figur 1 erläuterten Ausführungsbeispiel durchlaufen auch die in Figur 3 skizzierten ultrakurzen verstärkten Laserimpulse RVL die lösungsgemäße Dispersionsausgleichseinheit 9 unter Ausbildung der Pulsdauerkomprimierten, ultrakurzen verstärkten Laserimpulse RVL*.

### Bezugszeichenliste

- 1: Optische Einheit
- 2: Faser-basierte optische Verstärker-Anordnung
- 3: optischer Modulator
- 4: Faser-basierte, optische Verstärker-Einheit
- 5: Faser-basierte, optische Verstärker-Einheit
- 6: Faser-basierte, optische Verstärker-Einheit
- 7: optischer Zirkulator
- 8: optisches Umlenkelement
- 8.1, 8.2: Reflektorspiegel
- 9: Dispersionsausgleichseinheit
- 9.1: Stirnseitige Eintrittsfläche
- 9.2: Stirnseitige Austrittsfläche
- 9.3: reflexvermindernde Oberflächenvergütung
- SL: Seedimpulse
- RL: reflektierter Laserimpuls
- RVL: reflektierter verstärkter Laserimpuls
- RVL*: Pulsdauerkomprimierter, verstärkter ultrakurzer Laserimpuls
- VL: verstärkter Laserimpuls
- VBG1, VBG2: Volumen-Bragg-Gitter
- PL: Propagationslänge
- L: Laseranordnung
- PBS: Polarisationsstrahlteiler
- λ/4: λ/4-Verzögerungsplatte

## Patentansprüche

1. Laseranordnung zur optischen Verstärkung ultrakurzer Laserimpulse, die im Wege einer Chirped-Impulsverstärkung (CPA) verstärkt werden, mit einem Wellenlängenanteil im Wellenlängenbereich von 1.5 µm bis 2.1 µm und zeitlichen Pulsdauern im Piko- oder Femtosekundenbereich, umfassend wenigstens folgende Komponenten:
- eine optische Einheit (1) zur Erzeugung sogenannter Seed-Laserimpulse (SL) mit zeitlichen Pulsdauern im Piko- oder Femtosekundenbereich und wenigstens einem spektralen Wellenlängenanteil mit einer spektralen Bandbreite von mindestens 100 nm innerhalb eines Wellenlängenspektrums zwischen 1,5 µm und 2,1 µm,
- ein optisches Volumen-Bragg-Gitter, kurz VBG1, das derart ausgebildet und der optischen Einheit (1) mittel- oder unmittelbar im Strahlengang der Seed-Laserimpulse (SL) nachgeordnet ist, dass die im VBG1 reflektierten Laserimpulse (RL) verglichen zu den Seed-Laserimpulsen (SL) bezüglich ihrer zeitlichen Pulsdauer gestreckt und ihrer spektralen Bandbreite reduziert sind,
- eine dem VBG1 mittel- oder unmittelbar nachgeordnete Faser-basierte, optische Verstärker-Anordnung (2), längs der zumindest Teile der reflektierten Laserimpulse (RL) verstärkt werden, zum Erhalt verstärkter Laserimpulse (VL), sowie
- ein weiteres optisches Volumen-Bragg-Gitter, kurz VBG2, das derart ausgebildet und der optischen Verstärker-Anordnung (2) mittel- oder unmittelbar nachgeordnet ist, dass die im VBG2 reflektierten, verstärkten Laserimpulse (RVL) verglichen zu den verstärkten Laserimpulsen (VL) bezüglich ihrer zeitlichen Pulsdauer komprimiert sind,
**dadurch gekennzeichnet, dass** eine optische Dispersionsausgleichseinheit (9) vorgesehen ist, die zumindest eine zur Faser-basierten, optischen Verstärker-Anordnung (2) inhärenten Dispersion entgegengesetzte Dispersion besitzt und
aus einem für die Wellenlängen 1.5 - 2.1 µm transparenten, einstückigen Halbleitermaterial besteht, und
dass die Dispersionsausgleichseinheit (9) längs des Strahlenganges der reflektierten Laserimpulse (RL) vor der optischen Verstärker-Anordnung (2) oder der optischen Verstärker-Anordnung (2) längs des Strahlenganges der verstärkten Laserimpulse (VL) oder der reflektierten, verstärkten Laserimpulse (RVL) nachgeordnet, angeordnet ist.

2. Laseranordnung nach Anspruch 1,
**dadurch gekennzeichnet, dass** zwischen der optischen Einheit (1) und dem VBG1 längs des Strahlenganges der Seed-Laserimpulse (SL) zum Erhalt vorverstärkter Seed-Laserimpulse eine Faser-basierte, optische Verstärker-Einheit (6) angeordnet ist, die wenigstens einen optisch gepumpten Lichtwellenleiter mit einem Fasermantel und einem Faserkern aufweist, dessen Faserkernglas mit wenigstens einem der nachfolgenden Stoffe dotiert ist: Erbium (Er), Thullium (Tm), Holmium (Ho).

3. Laseranordnung nach Anspruch 1 oder 2,
**dadurch gekennzeichnet, dass** die Faser-basierte, optische Verstärker-Anordnung (2) wenigstens einen optisch gepumpten Lichtwellenleiter mit einem Fasermantel und einem Faserkern aufweist, dessen Faserkernglas mit wenigstens einem der nachfolgenden Stoffe dotiert ist: Erbium (Er), Thullium (Tm), Holmium (Ho).

4. Laseranordnung nach einem der Ansprüche 1 bis 3,
**dadurch gekennzeichnet, dass** die Dispersionsausgleichseinheit (9) derart konfektioniert ist, dass eine Faserdispersions-bedingte Verlängerung der zeitlichen Pulsdauer der die Faser-basierte, optische Verstärker-Anordnung (2) passierten verstärkten Laserimpulse (VL) bei Durchtritt durch die Dispersionsausgleichseinheit (9) kompensiert ist.

5. Laseranordnung nach Anspruch 4,
**dadurch gekennzeichnet, dass** die Dispersionsausgleichseinheit (9) derart konfektioniert ist, dass eine Faserdispersions-bedingte Verlängerung der zeitlichen Pulsdauer der die Faser-basierte, optische Verstärker-Einheit (6) sowie die Faser-basierte, optische Verstärker-Anordnung (2) passierten verstärkten Laserimpulse (VL) bei Durchtritt durch die Dispersionsausgleichseinheit (9) kompensiert ist.

6. Laseranordnung nach einem der Ansprüche 1 bis 5,
**dadurch gekennzeichnet, dass** das transparente Halbleitermaterial Silizium (Si), Germanium (Ge), Galliumarsenid (GaAs), Aluminiumarsenid (AlAs) ist.

7. Laseranordnung nach Anspruch 5 oder 6,
**dadurch gekennzeichnet, dass** die Dispersionsausgleichseinheit (9) über eine Propagationslänge (PL) verfügt, längs der die Laserimpulse das Halbleitermaterial durchlaufen und mit diesem wechselwirken, und
dass die Propagationslänge derart dimensioniert ist, dass eine zumindest durch die Faser-basierte, optische Verstärker-Anordnung bedingte Gruppenlaufzeit-Dispersion (GDD) zumindest teilweise kompensiert wird.

8. Laseranordnung nach einem der Ansprüche 1 bis 7,
**dadurch gekennzeichnet, dass** die Dispersionsausgleichseinheit (9) als einstückige Faser oder einstückig stabartig ausgebildet ist.

9. Laseranordnung nach einem der Ansprüche 1 bis 8,
**dadurch gekennzeichnet, dass** die Dispersionsausgleichs-Einheit (9) im Strahlengang unmittelbar vor oder nach der Faser-basierten optischen Verstärker-Anordnung (6) und/oder unmittelbar vor dem VBG1 angeordnet ist, oder
vor, innerhalb oder nach der Faser-basierten, optischen Verstärker-Anordnung (2) angeordnet ist, oder
dass die Dispersionsausgleichs-Einheit (9) dem VBG2 längs des Strahlenganges der reflektierten, verstärkten Laserimpulse (RVL) mittel- oder unmittelbar nachgeordnet ist.

10. Verfahren zur optischen Verstärkung ultrakurzer Laserimpulse mit einem Wellenlängenanteil im Wellenlängenbereich von 1.5 µm bis 2.1 µm und mit zeitlichen Pulsdauern im Piko- oder Femtosekundenbereich, bei dem mittels einer optischen Einheit (1) ultrakurze Laserimpulse erzeugt werden, die im Wege einer Chirped-Impulsverstärkung (CPA) verstärkt werden, bei der die ultrakurzen Laserimpulse Faser-Bragg-Gitter-gestützt (FBG) einer zeitlichen Pulsdauerstreckung, einer anschließenden Faser-basierten optischen Verstärkung sowie einer nachfolgenden Volumen-Bragg-Gitter-gestützten, zeitlichen Pulsdauerkompression unterzogen werden, zum Erhalt verstärkter ultrakurzer Laserimpulse,
**dadurch gekennzeichnet, dass** die Laserimpulse einem Dispersionsausgleich unterzogen werden, bei dem eine durch Gruppenlaufzeit-Dispersion bedingte im Wege der Faser-basierten optischen Verstärkung hervorgerufene zeitliche Pulsdauerstreckung der verstärkten ultrakurzen Laserimpulse zumindest teilweise kompensiert wird unddass bei dem Dispersionsausgleich die Laserimpulse mit einem bei Wellenlängen von 1.5 - 2.1 µm transparenten, einstückigen Halbleitermaterial wechselwirken, das über eine materialinhärente optische Dispersion verfügt, die einer der Faser-basierten optischen Verstärkung zugeordneten Gruppenlaufzeit-Dispersion (GDD) entgegengesetzt ist.

11. Verfahren nach Anspruch 10,
**dadurch gekennzeichnet, dass** das einstückige Halbleitermaterial und eine durch das Halbleitermaterial gerichtete Propagationslänge, längs der die Laserimpulse mit dem Halbleitermaterial wechselwirken, derart gewählt werden, dass zumindest eine Verkürzung der zeitlichen Pulsdauer der verstärkten ultrakurzen Laserimpulse erzielt wird.

12. Verwendung der mit der Laseranordnung nach einem der Ansprüche 1 bis 11 erzeugten verstärkten Laserimpulse, die im Wege optischer Fokussierung in ein erstes für die Wellenlängen der Laserimpulse transparentes Material gerichtet werden, so dass innerhalb des ersten Materials oder im Bereich einer Grenzfläche, zu einem zweiten Material mit abweichenden optischen Eigenschaften eine stoffliche Änderung innerhalb des Fokusbereiches im ersten und/oder zweiten Material eintritt.

13. Verwendung nach Anspruch 12,
**dadurch gekennzeichnet, dass** die stoffliche Änderung innerhalb des ersten und/oder zweiten Materials wenigstens einem der nachfolgenden Bearbeitungszwecken dient:
- Modifizieren,
- Prozessieren,
- Brechzahl ändern,
- Wellenleiter einschreiben,
- Verbinden,
- Schweissen von gleichem mit gleichem Material, von ungleichen Materialien, von für Wellenlängen von 2 µm transparenten Material mit für Wellenlängen von 2µm intransparentem Material,
- Sublimieren,
- Lift Off Verfahren bei Trägermaterialien,
- Trimmen im Materialinneren.

14. Verwendung nach Anspruch 13,
**dadurch gekennzeichnet, dass** folgende Materialien für die Bearbeitungszwecke geeignet sind und bei Wellenlängen von 2 µm transparent sind: Silizium, GaAs, Ge, oxidische Gläser, Borosilikatglas, Kalknatronglas, Quarzglas, sowie folgende Kunststoffe: Acrylnitril-Butadien-Styrol (ABS), Acrylester-Styrol-Acrylnitril (ASA), Polyamid (PA), Polybutylenterephthalat (PBT), Polycarbonat (PC), Polyethylen (PE), Polyetheretherketon (PEEK), Polyethersulfon (PES), Polymethylmethacrylat (PMMA), Polyoxymethylen (POM), Polypropylen (PP), Polystyrol (PS), Polytetrafluorethylen (PTFE), Styrol-Acrylnitril (SAN).

## Claims

1. A laser arrangement for optically amplifying ultrashort laser pulses, which are amplified by means of chirped pulse amplification (CPA), having a wavelength component in the wavelength range of 1.5 µm to 2.1 µm and temporal pulse durations in the pico- or femtosecond range, comprising at least the following components:
- an optical unit (1) for generating so-called seed laser pulses (SL) with temporal pulse durations in the pico- or femtosecond range and at least one spectral wavelength component with a spectral bandwidth of at least 100 nm within a wavelength spectrum between 1.5 µm and 2.1 µm,
- an optical volume Bragg grating, VBG1 for short, which is constructed in such a manner and is downstream of the optical unit (1) indirectly or directly in the beam path of the seed laser pulses (SL), that laser pulses (RL) reflected in VBG1 are stretched with respect to the temporal pulse duration thereof and reduced with respect to the spectral bandwidth thereof compared to the seed laser pulses (SL),
- a fibre-based, optical amplifier arrangement (2) indirectly or directly downstream of VBG1, along which at least portions of the reflected laser pulses (RL) are amplified, to obtain amplified laser pulses (VL), and also
- a further optical volume Bragg grating, VBG2 for short, which is constructed in such a manner and is downstream of the optical amplifier arrangement (2) indirectly or directly, that amplified laser pulses (RVL) reflected in VBG2 are compressed with respect to the temporal pulse duration thereof compared to the amplified laser pulses (VL),
**characterized in that** an optical dispersion compensation unit (9) is provided, which has at least one dispersion opposite to the dispersion inherent to the fibre-based, optical amplifier arrangement (2) and consists of a one-piece semiconductor material, which is transparent for the wavelengths 1.5-2.1 µm, and
**in that** the dispersion compensation unit (9) is arranged along the beam path of the reflected laser pulses (RL) upstream of the optical amplifier arrangement (2) or the optical amplifier arrangement (2) along the beam path of the amplified laser pulses (VL) or downstream of the reflected, amplified laser pulses (RVL).

2. The laser arrangement according to Claim 1,
**characterized in that** a fibre-based, optical amplifier unit (6) is arranged between the optical unit (1) and the VBG1 along the beam path of the seed laser pulses (SL) to obtain preamplified seed laser pulses, which optical amplifier unit has at least one optically pumped optical fibre having fibre cladding and a fibre core, the fibre core glass of which is doped with at least one of the following substances: erbium (Er), thulium (Tm), holmium (Ho).

3. The laser arrangement according to Claim 1 or 2,
**characterized in that** the fibre-based optical amplifier unit (2) has at least one optically pumped optical fibre having fibre cladding and a fibre core, the fibre core glass of which is doped with at least one of the following substances: erbium (Er), thulium (Tm), holmium (Ho).

4. The laser arrangement according to one of Claims 1 to 3,
**characterized in that** the dispersion compensation unit (9) is assembled in such a manner that a fibre-dispersion-induced extension of the temporal pulse duration of the amplified laser pulses (VL) which have passed the fibre-based optical amplifier arrangement (2) is compensated during passage through the dispersion compensation unit (9).

5. The laser arrangement according to Claim 4,
**characterized in that** the dispersion compensation unit (9) is assembled in such a manner that a fibre-dispersion-induced extension of the temporal pulse duration of the amplified laser pulses (VL) which have passed the fibre-based, optical amplifier unit (6) and the fibre-based, optical amplifier arrangement (2) is compensated during passage through the dispersion compensation unit (9).

6. The laser arrangement according to one of Claims 1 to 5,
**characterized in that** the transparent semiconductor material is silicon (Si), germanium (Ge), gallium arsenide (GaAs), aluminium arsenide (AlAs).

7. The laser arrangement according to Claim 5 or 6,
**characterized in that** the dispersion compensation unit (9) has a propagation length (PL), along which the laser pulses run through the semiconductor material and interact with the same, and
**in that** the propagation length is dimensioned in such a manner that a group delay dispersion (GDD) caused at least by the fibre-based, optical amplifier arrangement is at least partially compensated.

8. The laser arrangement according to one of Claims 1 to 7,
**characterized in that** the dispersion compensation unit (9) is constructed as a one-piece fibre or in one piece in a rod-like manner.

9. The laser arrangement according to one of Claims 1 to 8,
**characterized in that** the dispersion compensation unit (9) is arranged in the beam path directly upstream or downstream of the fibre-based optical amplifier arrangement (6) and/or directly upstream of the VBG1, or upstream, inside or downstream of the fibre-based, optical amplifier arrangement (2), or
**in that** the dispersion compensation unit (9) is indirectly or directly downstream of the VBG2 along the beam path of the reflected, amplified laser pulses (RVL).

10. A method for optically amplifying ultrashort laser pulses having a wavelength component in the wavelength range of 1.5 µm to 2.1 µm and having temporal pulse durations in the pico- or femtosecond range, in which ultrashort laser pulses are generated by means of an optical unit (1), which are amplified by means of chirped pulse amplification (CPA), in which the ultrashort laser pulses are subjected, in a manner supported by the fibre Bragg grating (FBG), to a temporal pulse duration extension, a subsequent fibre-based optical amplification and a subsequent volume-Bragg-grating-supported temporal pulse duration compression, to obtain amplified ultrashort laser pulses,
**characterized in that** the laser pulses are subjected to a dispersion compensation, in which a temporal pulse duration extension of the amplified ultrashort laser pulses caused by group delay dispersion and brought about by means of the fibre-based optical amplification is at least partially compensated and **in that** during the dispersion compensation, the laser pulses interact with a one-piece semiconductor material, which is transparent at wavelengths of 1.5 - 2.1 µm and has a materially inherent optical dispersion, which is opposite to a group delay dispersion (GDD) assigned to the fibre-based optical amplification.

11. The method according to Claim 10,
**characterized in that** the one-piece semiconductor material and a propagation length, directed through the semiconductor material, along which the laser pulses interact with the semiconductor material are chosen in such a manner that at least one shortening of the temporal pulse duration of the amplified ultrashort laser pulses is achieved.

12. The use of the amplified laser pulses generated with the laser arrangement according to one of Claims 1 to 11, which are directed by means of optical focusing into a first material transparent for the wavelengths of the laser pulses, so that, inside the first material or in the region of a boundary surface to a second material with different optical properties, a material change occurs inside the focal region in the first and/or second material.

13. The use according to Claim 12,
**characterized in that** the material change inside the first and/or second material is used for at least one of the following processing purposes:
- modification,
- processing,
- changing the refractive index,
- inscribing a waveguide,
- connection,
- welding like-with-like materials, dissimilar materials, material transparent for wavelengths of 2 µm with material non-transparent for wavelengths of 2 µm,
- sublimation,
- lift-off methods in the case of substrate materials,
- trimming in material interiors.

14. The use according to Claim 13,
**characterized in that** the following materials are suitable for the processing purposes and are transparent at wavelengths of 2 µm: silicon, GaAs, Ge, oxidic glasses, borosilicate glass, soda-lime glass, fused silica, and the following plastics: acrylonitrile butadiene styrene (ABS), acrylonitrile styrene acrylate (ASA), polyamide (PA), polybutylene terephthalate (PBT), polycarbonate (PC), polyethylene (PE), polyether ether ketone (PEEK), polyether sulfone (PES), polymethyl methacrylate (PMMA), polyoxymethylene (POM), polypropylene (PP), polystyrene (PS), polytetrafluoroethylene (PTFE), styrene acrylonitrile (SAN).

## Revendications

1. Ensemble à laser pour l'amplification optique d'impulsions laser ultra-courtes, qui sont amplifiées par voie d'une amplification d'impulsions à dérive de fréquence (CPA), avec une part de longueurs d'ondes dans un intervalle de longueurs d'ondes compris entre 1.5 µm et 2.1 µm et des durées d'impulsions temporelles de l'ordre des picosecondes ou des femtosecondes, comprenant au moins les composants suivants :
- une unité optique (1), destinée à générer des dénommées impulsions laser d'ensemencement (SL) avec des durées d'impulsions temporelles de l'ordre des picosecondes ou des femtosecondes et au moins une part de longueurs d'ondes spectrales d'une largeur de bande spectrale d'au moins 100 nm dans un spectre de longueurs d'ondes compris entre 1,5 µm et 2,1 µm,
- un réseau de diffraction optique de Bragg, en abrégé VBG1, qui est conçu et indirectement ou directement monté en aval de l'unité optique (1) dans le trajet de faisceau des impulsions laser d'ensemencement (SL) de telle sorte que, comparées aux impulsions laser d'ensemencement (SL), les impulsions laser (RL) réfléchies dans le VBG1 soient étirées au niveau de leur durée d'impulsion temporelle et réduites au niveau de leur largeur de bande spectrale,
- un ensemble amplificateur optique (2), basé sur fibre, indirectement ou directement monté en aval du VBG1, le long duquel au moins des parties des impulsions laser (RL) réfléchies sont amplifiées, pour obtenir des impulsions laser (VL) amplifiées, ainsi
- qu'un réseau de diffraction optique de Bragg supplémentaire, en abrégé VBG2, qui est conçu et indirectement ou directement monté en aval de l'ensemble amplificateur optique (2) de telle sorte que, comparées aux impulsions laser (RL) amplifiées, les impulsions laser (RVL) amplifiées réfléchies dans le VBG2 soient comprimées au niveau de leur durée d'impulsion temporelle,
**caractérisé en ce qu'**il est prévu une unité optique compensatrice de dispersion (9) qui fait preuve d'une dispersion opposée à la dispersion inhérente à l'ensemble amplificateur optique (2), basé sur fibre et qui est constituée d'une matière semi-conductrice en monobloc, transparente pour les longueurs d'ondes de 1.5 à 2.1 µm et
**en ce que** le long du trajet du faisceau des impulsions laser (RL) réfléchies, l'unité compensatrice de dispersion (9) est placée à l'avant de l'ensemble amplificateur (2) optique ou est placée en aval de l'ensemble amplificateur (2) optique, le long du trajet du faisceau des impulsions laser (VL) amplifiées ou des impulsions laser (RVL) amplifiées réfléchies.

2. Ensemble à laser selon la revendication 1,
**caractérisé en ce qu'**entre l'unité optique (1) et le VBG1, le long du trajet du faisceau des impulsions laser d'ensemencement (SL), pour obtenir des impulsions laser d'ensemencement pré-amplifiées, est placée une unité optique amplificatrice (6) basée sur fibre, qui comporte au moins un guide d'ondes à pompage optique, disposant d'une enveloppe de fibre et d'une âme de fibre dont le verre de l'âme de fibre est dopé avec au moins l'une des éléments suivants : l'erbium (Er), le thulium (Tm), l'holmium (Ho).

3. Ensemble à laser selon la revendication 1 ou 2,
caractérisé en ce l'ensemble amplificateur (2) optique, basé sur fibre comporte au moins un guide d'ondes à pompage optique, disposant d'une enveloppe de fibre et d'une âme de fibre dont le verre de l'âme de fibre est dopé avec au moins l'une des éléments suivants : l'erbium (Er), le thulium (Tm), l'holmium (Ho) .

4. Ensemble à laser selon l'une quelconque des revendications 1 à 3,
**caractérisé en ce que** l'unité compensatrice de dispersion (9) est confectionnée de telle sorte qu'un prolongement dû à la dispersion des fibres de la durée d'impulsion temporelle des impulsions laser (VL) amplifiées ayant passé l'ensemble amplificateur (2) optique, basé sur fibre soit compensé lors du passage de l'unité compensatrice de dispersion (9).

5. Ensemble à laser selon la revendication 4,
**caractérisé en ce que** l'unité compensatrice de dispersion (9) est confectionnée de telle sorte qu'un prolongement dû à la dispersion des fibres de la durée d'impulsion temporelle des impulsions laser (VL) amplifiées ayant passé l'unité optique amplificatrice (6) basée sur fibre, ainsi que l'ensemble amplificateur (2) optique, basé sur fibre soit compensé lors du passage de l'unité compensatrice de dispersion (9).

6. Ensemble à laser selon l'une quelconque des revendications 1 à 5,
**caractérisé en ce que** la matière semi-conductrice transparente est du silicium (Si), du germanium (Ge), de l'arséniure de gallium (GaAs), de l'arséniure d'aluminium (AIAs).

7. Ensemble à laser selon la revendication 5 ou 6,
**caractérisé en ce que** l'unité compensatrice de dispersion (9) dispose d'une longueur de propagation (PL), le long de laquelle les impulsions laser traversent la matière semi-conductrice et interagissent avec cette dernière et
**en ce que** la longueur de propagation est dimensionnée de telle sorte qu'une dispersion du délai de groupe (GDD) due au moins à l'ensemble amplificateur optique, basé sur fibre soit au moins partiellement compensée.

8. Ensemble à laser selon l'une quelconque des revendications 1 à 7,
**caractérisé en ce que** l'unité compensatrice de dispersion (9) est conçue sous la forme d'une fibre en monobloc ou en monobloc, en forme de tige

9. Ensemble à laser selon l'une quelconque des revendications 1 à 8,
**caractérisé en ce que** dans le trajet du faisceau, l'unité compensatrice de dispersion (9) est placée directement avant ou après l'unité optique amplificatrice (6) basée sur fibre et/ou directement à l'avant du VBG1 ou
est placée à l'avant, à l'intérieur ou à l'arrière de l'ensemble amplificateur (2) basé sur fibre ou
**en ce que** l'unité compensatrice de dispersion (9) est placée indirectement ou directement en aval du VBG2, le long du trajet du faisceau des impulsions laser (RVL) amplifiées réfléchies.

10. Procédé, destiné à l'amplification optique d'impulsions laser ultra-courtes, avec une part de longueurs d'ondes dans un intervalle de longueurs d'ondes compris entre 1.5 µm et 2.1 µm et des durées d'impulsions temporelles de l'ordre des picosecondes ou des femtosecondes, lors duquel, au moyen d'une unité optique (1), on génère des impulsions laser ultra-courtes, qui sont amplifiées par voie d'une amplification d'impulsions à dérive de fréquence (CPA), lors duquel, assistées par une diffraction de fibre de Bragg (FBG), les impulsions laser sont soumises à un étirage de la durée d'impulsion temporelle, à une amplification optique basée sur fibre consécutive, ainsi qu'à une compression successive de la durée d'impulsion temporelle, basée sur un réseau de diffraction de Bragg, pour obtenir des impulsions laser ultra-courtes amplifiées,
**caractérisé en ce que** les impulsions laser sont soumises à une compensation de dispersion, lors de laquelle, une extension temporelle de la durée d'extension des impulsions laser ultra-courtes amplifiées due à la dispersion du délai de groupe (GDD), provoquée par voie de l'amplification optique basée sur fibre est compensée au moins partiellement et **en ce que**, lors de la compensation de la dispersion, les impulsions laser interagissent avec une matière semi-conductrice en monobloc, transparente à des longueurs d'ondes de 1.5 à 2.1 µm, qui fait preuve d'une dispersion optique inhérente à la matière qui est opposée à une dispersion du délai de groupe (GDD) associée à l'amplification basée sur fibre.

11. Procédé selon la revendication 10,
**caractérisé en ce que** la matière semi-conductrice en monobloc et une longueur de propagation dirigée à travers la matière semi-conductrice, le long de laquelle les impulsions laser interagissent avec la matière semi-conductrice sont choisies de telle sorte qu'au moins un raccourcissement de la durée d'impulsion temporelle des impulsions laser ultra-courtes amplifiées soit obtenue.

12. Utilisation des impulsions laser amplifiées, générées à l'aide de l'ensemble à laser selon l'une quelconque des revendications 1 à 11, qui par voie d'une focalisation optique sont dirigées dans une première matière transparente aux longueurs d'ondes des impulsions laser, de sorte qu'au coeur de la première matière, ou dans la zone d'une surface limite vers une deuxième matière disposant de propriétés optiques divergentes, intervienne une modification de la matière dans la zone de focalisation dans la première et/ou dans la deuxième matière.

13. Utilisation selon la revendication 12,
**caractérisée en ce que** la modification de matière au coeur de la première et/ou de la deuxième matière est vouée à au moins l'une des fins d'usinage suivantes :
- une modification,
- un traitement,
- une modification de l'indice de réfraction,
- une inscription d'un guide d'ondes,
- un assemblage,
- un soudage de matières identiques, de matières différentes, d'une matière transparente à des longueurs d'onde de 2 µm, avec une matière non transparente à une longueur d'ondes de 2 µm.
- une sublimation,
- un procédé de lift-off pour des matières porteuses,
- un ajustage en coeur de matière.

14. Utilisation selon la revendication 13,
**caractérisée en ce que** les matières suivantes sont aptes aux fins d'usinage et sont transparentes à des longueurs d'ondes de 2 µm : le silicium, l'arséniure de gallium (GaAs), le germanium (Ge), les verres oxydants, le verre borosilicaté, le verre sodocalcique, le verre de quartz ainsi que les matières plastiques suivantes : l'acrylonitrile-butadiène-styrène (ABS), l'acrylonitrile-styrène-acrylate (ASA), le polyamide (PA), le poly(téréphtalate de butylène) (PBT), le polycarbonate (PC), le polyéthylène (PE), le polyétheréthercétone (PEEK), le polyéthersulfone (PES), le polyméthacrylate de méthyle (PMMA), le polyoxyméthylène (POM), le polypropylène (PP), le polystyrène (PS), le polytétrafluoroéthylène (PTFE), le styrène/acrylonitrile (SAN).
